# EUROPÄISCHE PATENTSCHRIFT

(11) **EP 2 589 553 B1**
(45) Veröffentlichungstag und Bekanntmachung des Hinweises auf die Patenterteilung: **14.05.2014**
(21) Anmeldenummer: 12007392.9
(22) Anmeldetag: 27.10.2012
(51) Int. Cl.: B65G 57/03, B65G 61/00, B65G 65/00, B21D 43/22

(54) **Vorrichtung zur Stapelung und Verladung von Blechformteilen an Pressen und Pressenstraßen**
Apparatus for stacking and loading sheet metal parts for presses and press lines
Appareil pour empiler et charger des ébauches en tôle sur des presses et chaînes de presses

(30) Priorität: 04.11.2011 DE 102011117640
(43) Veröffentlichungstag der Anmeldung: 08.05.2013
(73) Patentinhaber: AUDI AG, 85045 Ingolstadt (DE)
(72) Erfinder: Fritzche, Jens, 85051 Ingolstadt (DE); Kofend, Manfred, 86529 Schroebenhausen (DE); Adolf, Werner, 85134 Stammham (DE)
(74) Vertreter: Geissler, Manfred

(56) Entgegenhaltungen:
- DE-A1- 3 844 564
- DE-C1- 4 309 038
- US-A- 5 195 414

## Beschreibung

Die Erfindung betrifft eine Vorrichtung zur Stapelung von Blechformteilen im Entnahmebereich bzw. Auslaufbereich einer Presse oder Pressenstraße und zur Verladung der gebildeten Blechformteilstapel in einen Fertigteilbehälter oder dergleichen. Die Erfindung betrifft ferner eine zur Stapelung von Blechformteilen dienende Tischeinrichtung für die Verwendung in einer solchen Vorrichtung.

Pressen und Pressenstraßen weisen für gewöhnlich einen Entnahmebereich auf, in dem die hergestellten Blechformteile aufgenommen und in einem bereitgestellten Fertigteilbehälter oder dergleichen abgelegt werden können. Aus dem Stand der Technik sind hierfür automatisierte Vorrichtungen bekannt, wie z. B. in der DE 35 02 359 C2 und DE 37 37 913 C2 beschrieben. Nachteilig an diesen automatisierten Vorrichtungen ist jedoch deren geringe Flexibilität im Hinblick auf häufige Produktionsumstellungen sowie die nicht mögliche Qualitätskontrolle vor Ort an den Blechformteilen. Das Aufnehmen bzw. Entnehmen und Ablegen der Blechformteile an Pressen und Pressenstraßen erfolgt daher, insbesondere auch bei großen Blechformteilen, zumeist manuell durch einen oder mehrere Werker. Allerdings kann es hierbei für den oder die Werker zu ungünstigen körperlichen Belastungen kommen.

Das Dokument DE 38 44 564 A1 offenbart eine Vorrichtung zur Stapelung von Blechformteilen nach dem Oberbegriff des Anspruchs 1.

Es ist daher eine Aufgabe der Erfindung das Aufnehmen und Ablegen von Blechformteilen im Entnahmebereich bzw. Auslaufbereich einer Presse oder Pressenstraße unter ergonomischen Gesichtspunkten neu zu gestalten.

Diese Aufgabe wird gelöst durch eine erfindungsgemäße Vorrichtung mit den Merkmalen des Anspruchs 1. Vorteilhafte Ausgestaltungen und Weiterbildungen ergeben sich aus den abhängigen Ansprüchen und aus den nachfolgenden Erläuterungen.

Mit dem nebengeordneten Anspruch erstreckt sich die Lösung der Aufgabe auch auf eine Tischeinrichtung zur Verwendung in einer erfindungsgemäßen Vorrichtung. Vorteilhafte Ausgestaltungen und Weiterbildungen ergeben sich analog zur erfindungsgemäßen Vorrichtung. Auch im Übrigen gelten für beide Erfindungsgegenstände analog die vorausgehenden und/oder nachfolgenden Erläuterungen.

Unter einer teilmanuellen Stapelung und einer teilmanuellen Verladung werden Arbeitsschritte verstanden, die nicht vollständig automatisiert ausgeführt werden, sondern die zu einem wesentlichen Anteil manuell durch einen oder mehrere Werker mittels Handgriffen ausgeführt oder zumindest gelenkt werden, wobei der oder die Werker von den Einrichtungen der erfindungsgemäßen Vorrichtung entlastet, unterstützt und/oder assistiert werden. Dies erfolgt mit dem vorrangigen Ziel, die körperlichen Belastungen für den oder die Werker auf ein unschädliches Maß, auch wenn diese die Arbeit über Jahre hinweg ausüben, zu reduzieren.

Um die Belastungen des Werkers oder der Werker zu reduzieren, sieht die Erfindung vor, dass die auf der Presse oder in der Pressenstraße gefertigten Blechformteile nicht einzeln aufgenommen, sondern zunächst auf einer Tischeinrichtung im Auslaufbereich der Presse bzw. Pressenstraße zu einem Blechformteilstapel aufeinander gestapelt werden. Bevorzugt sind die Blechformteile derart ausgebildet, dass diese sich beim Aufeinanderstapeln von alleine zueinander ausrichten können.

Die Tischeinrichtung umfasst wenigstens zwei Stapelplätze, wobei entweder auf dem einen oder auf dem anderen Stapelplatz die von Presse oder der Pressenstraße kommenden Blechformteile, direkt, aufeinander gestapelt werden. Während von einem der Stapelplätze ein vollständiger Blechformteilstapel abgenommen bzw. durch Abheben entfernt werden kann, können ungehindert auf dem anderen Stapelplatz weitere Blechformteile gestapelt werden. Erfindungsgemäß handelt es sich um nebeneinander liegende Stapelplätze. Um ein Anheben der Blechformteile beim Stapeln zu vermeiden, ist jeder Stapelplatz mit einer im Stapeltakt absenkbaren Tischplatte oder dergleichen ausgebildet, wobei das taktweise Absenken automatisiert erfolgt. Insbesondere erfolgt das Absenken der Tischplatten nach unten in die verkleidete Tischeinrichtung hinein, wodurch ein optimaler Arbeitsschutz für den Werker besteht. Das taktweise Absenken einer Tischplatte erfolgt insbesondere derart, dass die zunehmende Stapelhöhe durch die sich im Stapeltakt absenkende Tischplatte kompensiert wird, so dass der Werker die zu stapelnden Blechformteile stets in der selben horizontalen Position übernehmen und aufstapeln kann. Der oder die Werker überwachen beim Aufstapeln die Qualität und die korrekte Stapelung der Blechformteile und können gegebenenfalls eingreifen, um z. B. ein schadhaftes Blechformteil auszusondern oder um die Stapellage zu korrigieren.

Ein Blechformteilstapel kann mindestens 10 Blechformteile, bevorzugt mindestens 15 Blechformteile, besonders bevorzugt mindestens 20 Blechformteile und insbesondere mindestens 25 Blechformteile umfassen. Hat der gebildete Blechformteilstapel eine vorgegebene Stapelhöhe bzw. Anzahl von Blechformteilen erreicht, so kann die Stapelung weiterer Blechformteile auf einem anderen Stapelplatz der Tischeinrichtung fortgesetzt werden. Parallel hierzu kann der vollständige Blechformteilstapel mit einer krangebundenen Greifereinrichtung aufgenommen, zu einem Fertigteilbehälter oder dergleichen verbracht und darin abgelegt werden. Nach dem Entfernen eines Blechformteilstapels kann die abgesenkte Tischplatte wieder in eine obere Ausgangslage verbracht werden, was insbesondere auch automatisch bzw. selbsttätig erfolgen kann.

Die Greifereinrichtung umfasst wenigstens einen Lochgreifer. Bevorzugt ist vorgesehen, dass die Greifereinrichtung nur Lochgreifer (d. h. wenigstens einen Lochgreifer) umfasst. Ein solcher Lochgreifer verfügt z. B. über einen stabförmigen Greifarm, der in einen durch übereinanderliegende Ausnehmungen in den gestapelten Blechformteilen gebildeten Kanal eingeschoben werden kann. Nach Betätigung wenigstens eines Spreizglieds, Hebedorns oder dergleichen kann der vollständige bzw. gesamte Blechformteilstapel angehoben und (von der Greifereinrichtung getragen) zu einem Fertigteilbehälter verbracht und darin in definierter Lage (bspw. nebeneinander oder auch übereinander) abgelegt werden.

Derartige Lochgreifer sind aus dem Stand der Technik bekannt, wozu z. B. auf die DE 198 16 049 B4 hingewiesen wird. Allerdings ist die Verwendung für das Anheben und Verladen von Blechformteilstapeln im Stand der Technik nicht vorgesehen. Ein solcher Lochgreifer bietet den Vorteil, dass durch den zwangsläufig herbeigeführten Formschluss zuverlässig alle Blechformteile eines Blechformteilstapels gegriffen werden können und dass beim Verladen bzw. Verfahren des Blechformteilstapels einzelne Blechformteile nicht herausfallen können. Somit können auch große Stapelhöhen (d. h. Blechformteilstapel mit vielen Blechformteilen) sicher gehandhabt werden. Die Verwendung eines solchen Lochgreifers setzt jedoch voraus, dass die auf der Presse oder in der Pressenstraße hergestellten Blechformteile mit geeigneten Ausnehmungen ausgebildet sind. Bevorzugt wird die krangebundene Greifereinrichtung manuell von einem Werker gesteuert.

Sowohl das Stapeln der Blechformteile als auch das Verbringen der Blechformteilstapel zu einem Fertigteilbehälter erfolgt auch bei großen und schweren Blechformteilen ohne nennenswerte körperliche Belastung für den oder die Werker, so dass die mit der erfindungsgemäßen Vorrichtung arbeitenden Menschen bzw. Werker nicht geschädigt werden. Ferner wird ein hohes Maß an Arbeitsplatzsicherheit gewährleistet. Gleichwohl kann der oder die Werker eine Qualitätsüberwachung vornehmen, wodurch verhindert wird, dass fehlerhafte Blechformteile eingestapelt und nachfolgend verbaut werden. Die Flexibilität bei Produktionsumstellungen bleibt auch mit der erfindungsgemäßen Vorrichtung erhalten. Ein platzeinnehmender Schutzzaun ist für die erfindungsgemäße Vorrichtung auch nicht erforderlich.

Die erfindungsgemäße Vorrichtung kann wenigstens eine Rutscheneinrichtung aufweisen, mit der die von der Presse oder Pressenstrasse kommenden Blechformteile auf die Tischeinrichtung überführt werden. Die Zuführung zur Rutscheneinrichtung kann z. B. mit einem Förderband (bzw. Auslaufband) oder dergleichen erfolgen. Das Ende der Rutscheneinrichtung befindet sich bevorzugt immer auf selber Höhe. Die zunehmende Stapelhöhe wird durch die sich im Stapeltakt absenkende Tischplatte kompensiert. Die Rutscheneinrichtung kann jedoch in Höhenrichtung und/oder in seitlicher Richtung verstellbar sein.

Bevorzugt ist vorgesehen, dass die Greifereinrichtung mechanisch oder pneumatisch betätigbar ist. Damit kann ein am Lochgreifer vorhandenes Spreizglied oder dergleichen z. B. durch einen mechanischen Handhebel und eine mechanische Übersetzung oder durch pneumatische Beaufschlagung betätigt werden. Insbesondere ist auch eine Lastsicherung vorgesehen, falls die Pneumatik ausfallen sollte.

Die Tischeinrichtung der erfindungsgemäßen Vorrichtung ist auf Bodenschienen verfahrbar gelagert. Durch das Verfahren der Tischeinrichtung sind die Stapelplätze abwechselnd zur Aufnahme der Blechformteile positioniert und werden insbesondere relativ zur Rutscheneinrichtung positioniert. Erfindungsgemäß ist vorgesehen, dass die Tischeinrichtung im ganzen verfahrbar gelagert ist. Besonders bevorzugt ist hierbei auch eine Arretierung für die Tischeinrichtung vorgesehen, um die verfahrbare Tischeinrichtung in wenigstens einer Position relativ zu den Schienen festsetzen zu können.

Das horizontale Verfahren bzw. das horizontale Bewegen der Tischeinrichtung auf den Schienen (translatorische Bewegung der Tischeinrichtung) kann durch manuelles Verschieben bewerkstelligt werden. Dies kann bspw. mit einem manuell zu betätigenden Hebelmechanismus erfolgen, wobei dieser Hebelmechanismus insbesondere mit einer mechanischen Übersetzung ausgebildet ist, um die Belastung des Werkers gering zu halten. Bevorzugt ist jedoch vorgesehen, dass die Tischeinrichtung einen pneumatischen oder auch elektrischen Antrieb zum Verfahren der Tischeinrichtung aufweist. Bevorzugt wird dieser pneumatische Antrieb von einem Werker manuell eingeschaltet bzw. ausgelöst und kann dann z. B. durch einen Endschalter wieder automatisch ausgeschaltet werden, wenn die Tischeinrichtung eine bestimmte Position erreicht hat.

Ferner ist bevorzugt vorgesehen, dass die Tischeinrichtung wenigstens einen pneumatisch angetriebenen Stellmechanismus für das taktweise Absenken der Tischplatten aufweist. Bevorzugt ist vorgesehen, dass das taktweise Absenken einer Tischplatte automatisch erfolgt, wozu die Tischeinrichtung wenigstens eine Lichtschranke aufweisen kann, die beim Aufstapeln eines Blechformteils von diesem Blechformteil unterbrochen wird, wodurch z. B. über ein Pneumatikventil eine definierte Abwärtsbewegung bzw. ein definierter Abwärtshub der betreffenden Tischplatte ausgelöst wird bzw. auslösbar ist.

Ebenso kann auch ein elektrisch angetriebener Stellmechanismus für das taktweise Absenken der Tischplatten vorgesehen sein. Das taktweise Absenken der Tischplatten erfolgt auch hier automatisch, wozu die Tischeinrichtung insbesondere eine elektronische Steuerung, wie bspw. eine SPS, aufweist, in welcher z. B. der Absenkweg pro aufgestapeltes Blechformteil als Parameter hinterlegt ist und entsprechend abgerufen werden kann. Um das Absenken einer Tischplatte auszulösen, kann die Tischeinrichtung wenigstens eine Lichtschranke aufweisen, die beim Aufstapeln eines Blechformteils von diesem Blechformteil unterbrochen wird, wodurch bspw. mittels SPS und Getriebemotor eine definierte Abwärtsbewegung bzw. ein definierter Abwärtshub der betreffenden Tischplatte ausgelöst wird bzw. auslösbar ist. Bevorzugt ist auch ein automatisches Ermitteln des erforderlichen Abwärtshubs vorgesehen, was bspw. durch eine Lichtschranke (Stopp der Abwärtsbewegung bei Freigabe der Lichtschranke) und insbesondere durch eine zweite Lichtschranke veranlasst werden kann.

Ferner ist bevorzugt vorgesehen, dass die Tischeinrichtung wenigstens eine Rutschkupplung aufweist, mit der die Kraft und/oder die Geschwindigkeit beim Aufwärtsbewegen einer abgesenkten Tischplatten in die obere Ausgangsposition begrenzbar ist. Eine solche Rutschkupplung ist im Besonderen dann vorteilig, wenn ein elektrisch angetriebener Stellmechanismus vorgesehen ist, mit dem sowohl die taktweise Abwärtsbewegung auch als die Aufwärtsbewegung bewerkstelligt wird.

Besonders bevorzugt ist hierbei vorgesehen, dass der definierte Abwärtshub veränderbar und insbesondere einstellbar ist. Dies kann bspw. mit einer einstellbaren Zählereinheit, wobei jeder Zählschritt einem bestimmten Fahrweg bzw. Absenkweg entspricht, oder mit einer elektronischen Steuerung, in welcher ein bestimmter Parameter als Absenkweg pro Blechformteil hinterlegt ist, bewerkstelligt werden. Die Einstellung kann basierend auf dem ausgemessenen Zwischenraum zwischen zwei im Blechformteilstapel benachbarten Blechformteilen oder basierend auf der möglichen Gesamtzahl von Blechformteilen in einem Blechformteilstapel erfolgen. Die Aufwärtsbewegung der betreffenden Tischplatte kann manuell oder automatisch bzw. selbsttätig ausgelöst werden, wobei dies aus Sicherheitsgründen insbesondere erst dann möglich sein soll, wenn der Blechformteilstapel zuvor von der Tischplatte entfernt wurde.

Die Tischplatten der Tischeinrichtung können wenigstens eine auswechselbare und/oder anpassbare Aufnahme für die zu stapelnden Blechformteile aufweisen, mit der das unterste zu stapelnde Blechformteil in eine definierte Position gebracht werden kann. Bei einer Produktionsumstellung (d. h. bei einer Umstellung der Presse bzw. Pressenstrasse auf andere Blechformteile) kann diese Aufnahme ausgetauscht oder entsprechend angepasst werden. Gegebenenfalls kann auch ein auf der Tischplatte befestigtes Blechformteil als Stapelschablone dienen.

Die Erfindung wird nachfolgend anhand der Figuren beispielhaft und in nicht einschränkender Weise näher erläutert. Die in den Figuren gezeigten und/oder nachfolgend erläuterten Merkmale können, unabhängig von konkreten Merkmalskombinationen, allgemeine Merkmale der Erfindung sein.
- Fig. 1: zeigt in einer schematischen Draufsicht eine erfindungsgemäße Vorrichtung zur teilmanuellen Stapelung von Blechformteilen im Entnahmebereich einer Presse und zur teilmanuellen Verladung der gebildeten Blechformteilstapel in Fertigteilbehälter.
- Fig. 2: zeigt in einer schematischen Seitenansicht die zur Vorrichtung der Fig. 1 gehörende Tischeinrichtung.
- Fig. 3: zeigt die zur Tischeinrichtung der Fig. 2 gehörende Taktgebereinheit.
- Fig. 4: zeigt in einer perspektivischen Ansicht eine bevorzugte Ausführungsform der Tischeinrichtung.

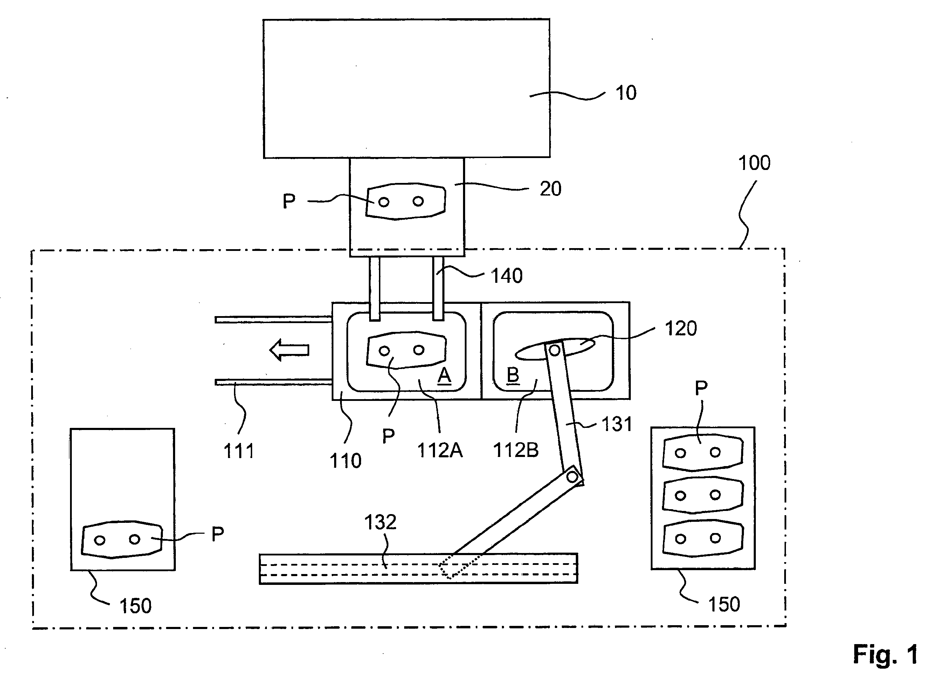

Fig. 1 zeigt den Entnahmebereich einer Presse oder Pressenstraße 10 zur Herstellung von Blechformteilen P. Die hergestellten Blechformteile P werden taktweise aus der Presse bzw. Pressenstraße 10 ausgegeben und über ein Förderband 20 in den Entnahmebereich befördert. Im Entnahmebereich befindet sich eine Vorrichtung mit der die hergestellten und taktweise ausgegebenen Blechformteile P umgesetzt werden, wozu diese zunächst gestapelt und anschließend als Blechformteilstapel in die bereitgestellten Fertigteilbehälter 150 verladen werden. Zur Veranschaulichung ist die erfindungsgemäße Vorrichtung bzw. Anlage 100 mit einer strichpunktierten Linie umrandet.

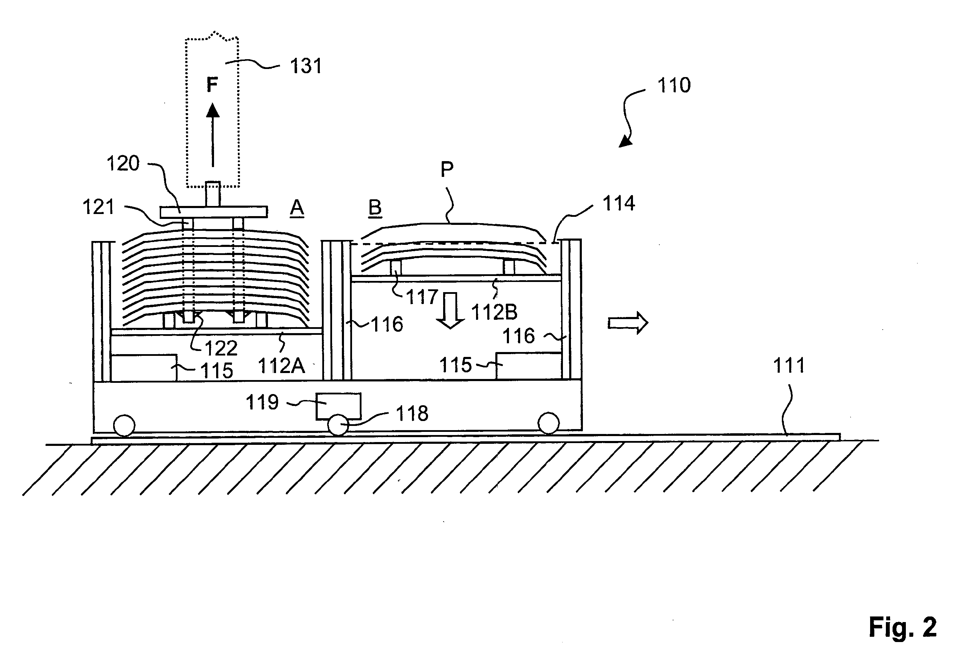

Zur Vorrichtung 100 gehört eine auf Bodenschienen 111 gelagerte und horizontal verfahrbare Tischeinrichtung 110 mit mehreren Stapelplätzen A und B, auf denen die von der Presse bzw. Pressenstraße 10 kommenden Blechformteile P zu einem Blechformteilstapel (siehe Fig. 2) aufeinander gestapelt werden können. Die Stapelplätze A und B sind mit im Stapeltakt absenkbaren Tischplatten 112A und 112B ausgebildet. Zur Vorrichtung 100 gehört ferner eine Rutscheneinrichtung 140 über die die Blechformteile P schwerkraftbedingt vom Förderband 20 zum Stapelplatz A (wie gezeigt) oder B der Tischeinrichtung 110 rutschen können. Zur Vorrichtung 100 gehört auch eine Greifereinrichtung 120, mit der ein vollständiger Blechformteilstapel von der Tischeinrichtung 110 aufgenommen und in einem der Fertigteilbehälter 150 abgesetzt bzw. abgestellt werden kann. Mit 131 ist ein Kran (bspw. ein Deckenkran, Bodenkran oder dergleichen) bezeichnet, an dem die Greifereinrichtung 120 befestigt ist (krangebundene Greifereinrichtung). Mit 132 ist eine Schiene oder ein Portal für den Kran 131 bezeichnet.

Wie bereits erläutert rutschen die hergestellten Blechformteile P vom Förderband 20 kommend über die Rutscheneinrichtung 140 zu einem der Stapelplätze A oder B der Tischeinrichtung 110. Nach jedem aufgestapelten Blechformteil P führt die betroffene Tischplatte 112A oder 112B einen definierten Abwärtshub aus, so dass das nachfolgende Blechformteil P ohne Anheben auf den Blechformteilstapel aufgestapelt werden kann. Ein sich im Entnahmebereich aufhaltender Werker (oder auch mehrerer Werker) überprüft die Qualität der hergestellten Blechformteile P vor dem Aufstapeln und sorgt durch manuelles Eingreifen dafür, dass die Blechformteile P auch korrekt auf dem Blechformteilstapel aufgestapelt werden, ohne dass es hierbei zu bedenklichen körperlichen Belastungen für den Werker kommt.

Ist ein Blechformteilstapel durch Erreichen seiner maximalen Stapelhöhe vollständig, so wird die Tischeinrichtung 110 auf den Schienen 111 verfahren, so dass zur Stapelung nachfolgender Blechformteile P ein leerer Stapelplatz A oder B an der Rutscheneinrichtung 140 positioniert wird. Alternativ oder ergänzend könnte z. B. auch die Rutscheneinrichtung 140 entsprechend verschwenkt werden. Anschließend kann der vollständige Blechformteilstapel mittels der Greifereinrichtung 120 entfernt und in einem der Fertigteilbehälter 150 abgelegt werden. Die Steuerung der Greifereinrichtung 120 und/oder des Krans 131 erfolgt manuell. Ist ein Fertigteilbehälter 150 voll, so wird dieser gegen einen leeren Fertigteilbehälter 150 ausgetauscht.

Fig. 2 zeigt die Tischeinrichtung 110 in einer Seitenansicht, in der auch die Stellmechanismen für die Tischplatten 112A und 112B vereinfacht dargestellt sind. Der rechte Stapelplatz B befindet sich im aktiven Stapelbetrieb, d. h. die momentan von der Presse bzw. Pressenstraße 10 über das Förderband 20 und die Rutscheneinrichtung 140 kommenden Blechformteile P werden an diesem Stapelplatz B direkt (d. h. ohne Beabstandung zueinander) aufeinander gestapelt. Die von der Presse bzw. Pressenstraße 10 kommenden Blechformteile P sind in der Regel einzelne Blechformteile. Es kann jedoch auch vorgesehen sein, dass die von der Presse bzw. Pressenstraße 10 kommenden Blechformteile bereits pressenseitig paarweise gestapelt wurden.

Bei jedem Stapelvorgang, wobei das aufgestapelte Blechformteil P auf dem jeweils vorhergehenden Blechformteil P zum Liegen kommt, wird die Lichtschranke 114 unterbrochen, was in der Folge einen definierten Abwärtshub der an den Führungen 116 geführten Tischplatte 112B auslöst. Der Abwärtshub pro aufgestapelten Blechformteil P entspricht im Wesentlichen dem vertikalen Abstand den zwei benachbarte Blechformteile P im Blechformteilstapel einnehmen. Der Abwärtshub der Tischplatte 112B wird von der Steuerungseinrichtung 115 bewerkstelligt, wie nachfolgend noch näher erläutert. Durch das getaktete Absenken des Blechformteilstapels quasi in die Tischeinrichtung 110 hinein werden auch die Gefahren beim versehentlichen Umkippen des Blechformteilstapels reduziert. Mit 117 ist eine anpassbare oder auch auswechselbare bzw. austauschbare Aufnahme (bspw. ein so genanntes Aufnahmenest) für die zu stapelnden Blechformteile P bezeichnet, die einteilig oder mehrteilig ausgebildet sein kann.

Auf dem linken Stapelplatz A befindet sich ein vollständiger Blechformteilstapel der von der krangeführten Greifereinrichtung 120 gegriffen und angehoben werden kann, was durch den Pfeil F veranschaulicht ist. Die Greifereinrichtung 120 umfasst zwei Lochgreifer in Form von stabförmigen Greifarmen 121, die von oben in die übereinanderliegenden und zueinander fluchtenden Ausnehmungen in den gestapelten Blechformteilen P (siehe Fig. 1) einfahren können bzw. eingeschoben werden können. Im unteren Bereich sind die Lochgreifer 121 mit mechanisch oder pneumatisch betätigbaren bzw. ausfahrbaren Spreizelementen 122 ausgebildet, um den Blechformteilstapel aufnehmen zu können. Der aufgenommene Blechformteilstapel kann dann mittels des Krans 131 zu einem der Fertigteilbehälter 150 verbracht werden. Ein Umkippen des Blechformteilstapels oder ein Verrutschen der Blechformteile P innerhalb des mit der Greifereinrichtung 120 gegriffen Blechformteilstapels ist wegen des herbeigeführten Formschlusses zwischen den Greifarmen 121 und den Blechformteilen P unmöglich.

Nach Entfernen des Blechformteilstapels kann die Tischplatte 112A aus der gezeigten unteren Position in eine obere Ausgangsposition hochgefahren werden. Wenn der rechte Stapelplatz B keine weiteren Blechformteile P mehr aufnehmen kann wird die Tischeinrichtung 110 auf den Schienen 111 nach rechts verfahren (wie mit dem Bewegungspfeil veranschaulicht). Mit 119 ist ein pneumatischer Antrieb für die Rollen 118 bezeichnet. Ebenso könnte es sich bei dem Antrieb 119 auch um einen elektrischen Antrieb handeln. Nach dem Verfahren der Tischeinrichtung 110 von links nach rechts wird die Stapelung der gefertigten Blechformteile P auf dem linken Stapelplatz A fortgesetzt (siehe Fig. 1), während der Blechformteilstapel vom rechten Stapelplatz B in der zuvor erläuterten Weise abgenommen wird. Diese Abfolge wiederholt sich fortlaufend, wobei die Stapelplätze A und B wechselweise vor dem Förderband 20 bzw. der Rutscheneinrichtung 140 positioniert werden.

Die Stellmechanismen für die Tischplatten 112A und 112B sowie die zugehörigen Komponenten sind im Wesentlichen identisch ausgebildet. Das getaktete Absenken der Tischplatten 112A und 112B wird mittels Kettentrieb von den Steuerungseinheiten bzw. Taktgebereinheiten 115 bewerkstelligt. Anstelle von zwei Taktgebereinheiten (wie gezeigt) kann auch eine gemeinsame Taktgebereinheit vorgesehen sein.

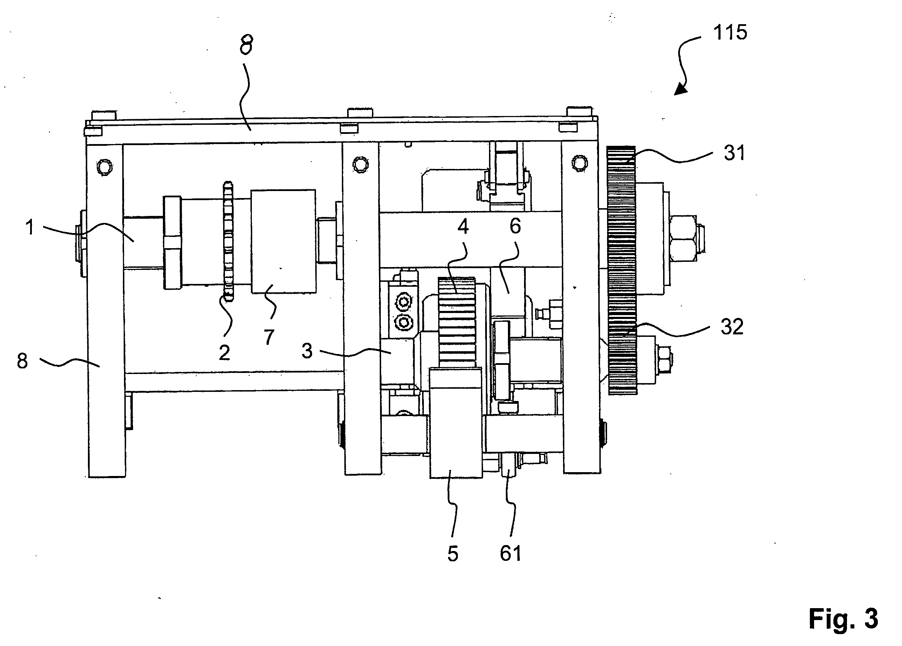

Fig.3 zeigt eine Ausführungsmöglichkeit für eine Taktgebereinheit 115. Die Taktgebereinheit 115 umfasst eine obere Welle 1, auf der ein Kettenrad 2 angeordnet ist, wobei das Kettenrad 2 zu einem Kettentrieb gehört, mit dem die zugehörige Tischplatte 112A oder 112B aus einer oberen Ausgangsposition taktweise abgesenkt werden kann. Die obere Welle 1 wird über ein Zahnradgetriebe mit austauschbaren Zahnrädern 31 und 32 angetrieben.

Durch Austauschen der Zahnräder 31 und 32 werden verschiedene Übersetzungen ermöglicht. Das untere Zahnrad 32 wird über eine untere Welle 3 angetrieben. Auf der unteren Welle 3 befindet sich ein Sperrrad 4, welches von einem Pneumatikzylinder 6 über einen Sperrklinkenmechanismus, zu dem die Sperrklinke 5 und das Sperrrad 4 gehören, schrittweise gedreht wird. Der Pneumatikzylinder 6 wird über ein von der Lichtschranke 114 ausgelöstes Pneumatikventil angesteuert .

Bei jedem Ein- und/oder Ausfahren der zum Pneumatikzylinder 6 gehörenden Kolbenstange 61 wird das Sperrrad 4 mittels der Sperrklinke 5 um einen entsprechenden Drehwinkel verdreht und treibt somit die untere Welle 3 an. Die Taktgebereinheit 115 wird somit rein pneumatisch betrieben, d. h. das getaktete Absenken der Tischplatten 112A und 112B erfolgt pneumatisch gesteuert.

Die Taktgebereinheit 115 umfasst ferner eine Freilaufkupplung 7, damit eine abgesenkte Tischplatte 112A oder 112B wieder in die obere Ausgangsposition verfahren werden kann, was bspw. selbsttätig nach Lösen der Freilaufkupplung 7 durch Federkraftbeaufschlagung der betreffenden Tischplatte 112A oder 112B erfolgen kann. Die Federkraftbeaufschlagung kann bspw. durch wenigstens eine Federeinrichtung und insbesondere durch eine einstellbare Federeinrichtung bewirkt werden, wobei diese Federeinrichtung beim taktweisen Absenken der betreffenden Tischplatte 112A/112B sukzessive gespannt wird. In besonders bevorzugter Weise wird die durch Federkraft herbeigeführte Aufwärtsbewegung der betreffenden Tischplatte 112A/ 112B in die obere Ausgangsposition gedämpft und somit die Geschwindigkeit der Aufwärtsbewegung begrenzt, was bspw. durch ein Gegengewicht realisiert werden kann. Ferner kann auch eine Endlagendämpfung vorgesehen sein, um die Aufwärtsbewegung der betreffenden Tischplatte 112A/112B vor Erreichen der oberen Ausgangsposition sanft abzubremsen. Aus Sicherheitsgründen ist eine kraftbetätigte Aufwärtsbewegung einer Tischplatte 112A oder 112B mittels der Taktgebereinheit 115 nicht vorgesehen und insbesondere auch nicht ermöglicht. Mit 8 ist ein Rahmen bezeichnet, der zumindest teilweise von einer Gehäusewandung umgeben sein kann.

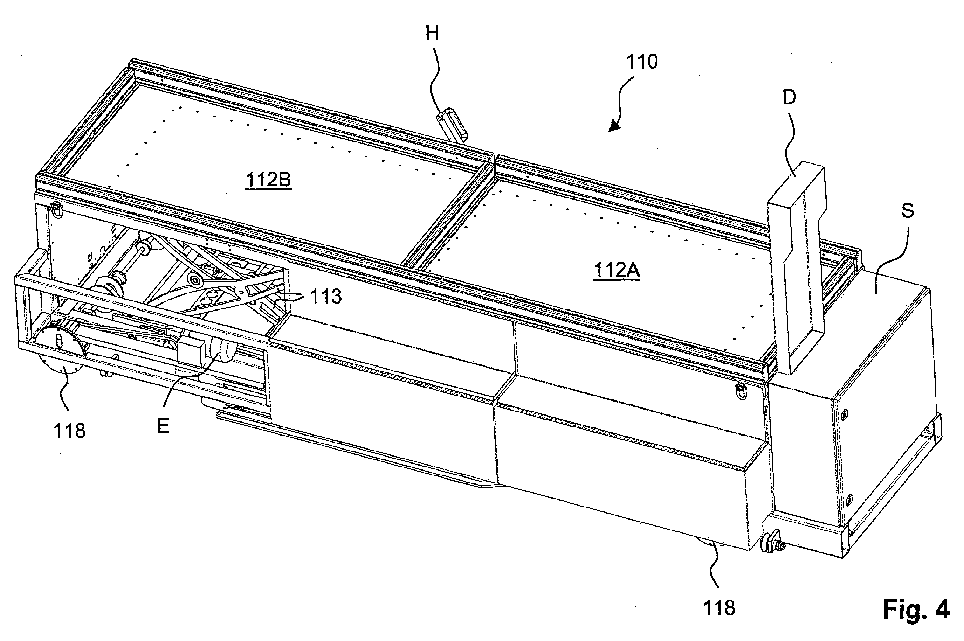

Fig. 4 zeigt eine bevorzugte Ausführungsform der Tischeinrichtung 110 bei der anstelle des vorausgehend erläuterten pneumatisch angetriebenen Stellmechanismus ein elektrisch angetriebener Stellmechanismus für das taktweise Absenken der Tischplatten 112A/112B vorgesehen ist. Der durch entfernte Verkleidungsteile sichtbare Stellmechanismus für die rechte Tischplatte 112B (bezogen auf die Arbeitsposition eines Werkers) umfasst einen Scherentrieb bzw. Scherenmechanismus 113 zum Anheben und Absenken der Tischplatte 112B und einen Elektromotor bzw. Getriebemotor E zum Antrieb des Scherentriebs 113. Der nicht sichtbare Stellmechanismus für die andere Tischplatte 112A ist identisch ausgebildet, d. h. die nachfolgenden Erläuterungen gelten hierfür analog.

Das taktweise Absenken der Tischplatte 112B wird von einer elektronischen Steuerung S, wobei es sich insbesondere um eine SPS handelt, gesteuert. Mit D ist ein Displayhalter bezeichnet, an dem Schalter, Instrumente, Einstellelemente und dergleichen für die Steuerung S angeordnet werden können.

Die Aufwärtsbewegung der abgesenkten Tischplatte 112B in die gezeigte obere Ausgangsposition wird ebenfalls durch den Scherentrieb 113 und den Elektromotor E bewerkstelligt. Die Kraft und/oder Geschwindigkeit der Aufwärtsbewegung kann mit einer Sicherheits-Rutschkupplung begrenzt werden, die im Antriebsstrang zwischen der Antriebswelle für den Scherentrieb 113 und dem Antriebsmotor E angeordnet wird. Bei der Drehrichtung "Tisch abwärts" wird die Sicherheits-Rutschkupplung über einen Sperrschieber oder dergleichen verriegelt. Die Tischplatte 112B verfügt somit über ihre volle Tragfähigkeit. Bei der Drehrichtung "Tisch aufwärts", also dann, wenn die Drehrichtung umgekehrt wird, kann der Elektromotor E erst dann die Tischplatte 112B nach oben bewegen, wenn der Sperrschieber die Verriegelung freigibt und dadurch das Motordrehmoment über die Sicherheitskupplung übertragen wird. Die Aufwärtsbewegung wird erst dann ermöglicht, wenn die Sicherheits-Rutschkupplung frei gegeben ist. Die Stellung des Sperrschiebers kann von der Steuerung S überwacht werden.

Bei der in Fig. 4 gezeigten Ausführungsform ist ein manuell schwenkbarer Handhebel H zum manuellen Verschieben der Tischeinrichtung 110 vorgesehen. Der Handhebel H ist Bestandteil eines Hebelmechanismus mit mechanischer Übersetzung. Ein pneumatischer oder ein elektrischer Antrieb 119 (siehe Fig. 2) ist hier nicht vorgesehen; d. h. das Verschieben erfolgt ausschließlich manuell durch den Werker.

Wie ferner aus der in Fig. 4 gezeigten Darstellung zu erkennen, ist die Tischeinrichtung 110 umseitig verkleidet. Zum einen bietet dies dem Werker einen optimalen Arbeitsschutz, zum anderen werden auch die Stellmechanismen für die Tischplatten 112A und 112B gut geschützt.

## Patentansprüche

1. Vorrichtung (100) zur Stapelung von Blechformteilen (P) im Entnahmebereich einer Presse oder Pressenstrasse (10) und zur Verladung der gebildeten Blechformteilstapel in einen Fertigteilbehälter (150) oder dergleichen,
**gekennzeichnet durch**
- eine Tischeinrichtung (110) mit mehreren nebeneinander liegenden Stapelplätzen (A, B), auf denen die von der Presse oder Pressenstraße (10) kommenden Blechformteile (P) direkt und ohne Beabstandung teilmanuell zu einem Blechformteilstapel aufeinander gestapelt werden,
wobei die Stapelplätze (A, B) jeweils mit einer automatisiert im Stapeltakt absenkbaren Tischplatte (112A, 112B) ausgebildet sind, um ein Anheben der Blechformteile (P) beim Stapeln zu vermeiden, und wobei die Tischeinrichtung (110) im ganzen auf Bodenschienen (111) verfahrbar gelagert ist, wodurch die nebeneinander liegenden Stapelplätze (A, B) wechselweise zur Aufnahme der Blechformteile (P) positioniert werden können; und
- eine krangebundene Greifereinrichtung (120) mit wenigstens einem Lochgreifer (121), mit der teilmanuell ein vollständiger Blechformteilstapel von einem Stapelplatz (A, B) aufgenommen, zu dem Fertigteilbehälter (150) verbracht und darin abgelegt werden kann, während die Stapelung weiterer Blechformteile (P) auf einem anderen Stapelplatz (B, A) der Tischeinrichtung (110) fortgesetzt werden kann.

2. Vorrichtung (100) nach Anspruch 1,
**dadurch gekennzeichnet, dass**
diese ferner eine Rutscheneinrichtung (140) aufweist, mit der die von der Presse oder Pressenstrasse (10) kommenden Blechformteile (P) zur Tischeinrichtung (110) überführt werden.

3. Vorrichtung (100) nach Anspruch 1 oder 2,
**dadurch gekennzeichnet, dass**
die Greifereinrichtung (120) mechanisch oder pneumatisch betätigbar ist.

4. Vorrichtung (100) nach einem der vorausgehenden Ansprüche,
**dadurch gekennzeichnet, dass**
die verfahrbare Tischeinrichtung (110) einen pneumatischen oder elektrischen Antrieb (119) zum Verfahren der Tischeinrichtung aufweist.

5. Vorrichtung (100) nach einem der vorausgehenden Ansprüche,
**dadurch gekennzeichnet, dass**
die Tischeinrichtung (110) wenigstens einen pneumatisch oder elektrisch angetriebenen Stellmechanismus für das taktweise Absenken der Tischplatten (112A, 112B) aufweist.

6. Vorrichtung (100) nach einem der vorausgehenden Ansprüche,
**dadurch gekennzeichnet, dass**
die Tischeinrichtung (110) wenigstens eine Rutschkupplung (7) aufweist, mit der die Kraft und/oder Geschwindigkeit beim Aufwärtsbewegen einer abgesenkten Tischplatten (112A, 112B) in die obere Ausgangsposition begrenzbar ist.

7. Vorrichtung (100) nach einem der vorausgehenden Ansprüche,
**dadurch gekennzeichnet, dass**
die Tischeinrichtung (110) wenigstens eine Lichtschranke (114) aufweist, mit der beim Aufstapeln eines Blechformteils (P) ein definierter Abwärtshub der betreffenden Tischplatte (112A, 112B) ausgelöst werden kann.

8. Vorrichtung (100) nach einem der vorausgehenden Ansprüche,
**dadurch gekennzeichnet, dass**
der definierte Abwärtshub pro Stapeltakt veränderbar und insbesondere einstellbar ist.

9. Vorrichtung (100) nach einem der vorausgehenden Ansprüche,
**dadurch gekennzeichnet, dass**
die Tischplatten (112A, 112B) wenigstens eine auswechselbare und/oder anpassbare Aufnahme (117) für die zu stapelnden Blechformteile (P) aufweisen.

10. Tischeinrichtung (110) zur Verwendung in einer Vorrichtung (100) gemäß einem der vorausgehenden Ansprüche, wobei diese Tischeinrichtung (110) gemäß den diesbezüglichen Merkmalen in wenigstens einem der vorhergehenden Ansprüche ausgebildet ist.

## Claims

1. Device (100) for stacking sheet-metal moulded parts (P) in the removal region of a press or a press line (10) and for loading the sheet-metal moulded part stack that is formed into a finished-part container (150) or the like,
**characterised by**
- a bed apparatus (110) comprising a plurality of adjacent stacking sites (A, B) on which the sheet-metal moulded parts (P) coming from the press or the press line (10) are stacked one directly on top of the other, with no gaps, in a partially manual process to form a sheet-metal moulded part stack,
the stacking sites (A, B) each being designed with a bed plate (112A, 112B) which can be lowered in an automated manner during the stacking cycle so the sheet-metal moulded parts (P) do not have to be lifted during stacking, and
the bed apparatus (110) being displaceably mounted completely on floor rails (111), whereby the stacking sites (A, B), arranged next to one another, can be selectively positioned for receiving the sheet-metal moulded parts (P); and
- a gripper apparatus (120) bound to a crane and comprising at least one hole gripper (121), by means of which a complete sheet-metal moulded part stack can be received by a stacking site (A, B) in a partially manual process, brought to the finished-part container (150) and placed therein, while other sheet-metal moulded parts (P) can continue to be stacked on a different stacking site (B, A) of the bed apparatus (110).

2. Device (100) according to claim 1,
**characterised in that**
said device further comprises a skid apparatus (140) by means of which the sheet-metal moulded parts (P) coming from the press or the press line (10) are transferred to the bed apparatus (110).

3. Device (100) according to either claim 1 or claim 2,
**characterised in that**
the gripper apparatus (120) is mechanically or pneumatically actuatable.

4. Device (100) according to any of the preceding claims,
**characterised in that**
the movable bed apparatus (110) comprises a pneumatic or electric drive (119) for moving the bed apparatus.

5. Device (100) according to any of the preceding claims,
**characterised in that**
the bed apparatus (110) comprises at least one pneumatically or electrically driven adjustment mechanism for cyclically lowering the bed plates (112A, 112B).

6. Device (100) according to any of the preceding claims,
**characterised in that**
the bed apparatus (110) comprises at least one skid coupling (7) by means of which the force and/or the speed (112A, 112B) can be limited when a lowered bed plate is moved upwards into the upper starting position.

7. Device (100) according to any of the preceding claims,
**characterised in that**
the bed apparatus (110) comprises at least one photoelectric sensor (114), by means of which a defined downwards stroke of the corresponding bed plate (112A, 112B) can be triggered when a sheet-metal moulded part (P) is stacked.

8. Device (100) according to any of the preceding claims,
**characterised in that**
the defined downwards stroke can be altered, and in particular adjusted, in each stacking cycle.

9. Device (100) according to any of the preceding claims,
**characterised in that**
the bed plates (112A, 112B) comprise at least one replaceable and/or adaptable receptacle (117) for the sheet-metal moulded parts (P) which are to be stacked.

10. Bed apparatus (110) for use in a device (100) according to any of the preceding claims, wherein said bed apparatus (110) is formed according to the relevant features in at least one of the preceding claims.

## Revendications

1. Appareil (100) pour empiler des ébauches de
· tôle (P) dans la zone de prélèvement d'une presse ou d'un train de presses (10) et pour charger la pile formée d'ébauches de tôle dans un collecteur de pièces préfabriquées (150) ou analogue,
**caractérisé par** :
- un dispositif à table (110) avec plusieurs emplacements d'empilage (A, B) disposés côte à côte, sur lesquels les ébauches de tôle (P) venant de la presse ou du train de presses (10) sont empilées l'une sur l'autre directement et sans espacement en partie manuellement pour former une pile d'ébauches de tôle,
dans lequel les emplacements d'empilage (A, B) sont formés respectivement avec une plaque de table (112A, 11B) qui peut être abaissée de manière automatisée selon le cycle d'empilage pour empêcher le soulèvement des ébauches de tôle (P) lors de l'empilage et
dans lequel le dispositif à table (110) est monté de manière à pouvoir se déplacer en totalité sur des rails au sol (111), si bien que les emplacements d'empilage (A, B) qui se trouvent côte à côte peuvent être positionnés tout à tour pour recevoir les ébauches de tôle (P) ; et
- un dispositif de préhension (120) relié à une grue avec au moins un grappin à trous (121), avec lequel on peut en partie manuellement recueillir une pile complète d'ébauches de tôle d'un emplacement d'empilage (A, B), l'amener au collecteur de pièces préfabriquées (150) et l'y stocker, tandis que l'empilage d'autres ébauches de tôle (P) peut se poursuivre sur un autre emplacement d'empilage (B, A) du dispositif à table (110).

2. Appareil (100) selon la revendication 1, **caractérisé en ce que** :
cet appareil présente en outre un dispositif à glissement (140), avec lequel les ébauches de tôle (P) venant de la presse ou du train de presses (10) sont transférées au dispositif à table (110).

3. Appareil (100) selon la revendication 1 ou la revendication 2,
**caractérisé en ce que** :
le dispositif de préhension (120) peut être commandé en mode mécanique ou en mode hydraulique.

4. Appareil (100) selon l'une quelconque des revendications précédentes,
**caractérisé en ce que** :
le dispositif à table déplaçable (110) présente une commande pneumatique ou électrique (119) pour déplacer le dispositif à table.

5. Appareil (100) selon l'une quelconque des revendications précédentes,
**caractérisé en ce que** :
le dispositif à table (110) présente une unité de commande entraînée par voie pneumatique ou électrique pour l'abaissement cyclique des plaques de table (112A, 112B).

6. Appareil (100) selon l'une quelconque des revendications précédentes,
**caractérisé en ce que** :
le dispositif à table (110) présente au moins un couplage à friction (7), avec lequel la force et/ou la vitesse lors du déplacement ascendant de l'une des plaques de table abaissées (112A, 112B) peut ou peuvent être limitées dans la position de départ supérieure.

7. Appareil (100) selon l'une quelconque des revendications précédentes,
**caractérisé en ce que** :
le dispositif à table (110) présente au moins une barrière lumineuse (114), avec laquelle, lors de l'empilage d'une ébauche de tôle (P), une course descendante définie de la plaque de table concernée (112A, 112B) peut être déclenchée.

8. Appareil (100) selon l'une quelconque des revendications précédentes,
**caractérisé en ce que** :
la course descendante définie par cycle d'empilage peut être modifiée et en particulier réglée.

9. Appareil (100) selon l'une quelconque des revendications précédentes,
**caractérisé en ce que** :
les plaques de table (112A, 112B) présentent au moins un logement remplaçable et/ou adaptable (117) pour les ébauches de tôle (P) à empiler.

10. Dispositif à table (110) pour utilisation dans un appareil (100) selon l'une quelconque des revendications précédentes, dans lequel ce dispositif à table (110) se présente selon les caractéristiques correspondantes dans au moins l'une quelconque des revendications précédentes.
